# EUROPEAN PATENT APPLICATION

(11) **EP 4 613 700 A1**
(43) Date of publication of application: **10.09.2025**
(21) Application number: 24000029.9
(22) Date of filing: 07.03.2024
(51) Int. Cl.: C01B 3/04, C01B 3/22, C25B 1/042

(54) **PROCESS AND REACTOR FOR GENERATING HYDROGEN**

(71) Applicant: Energy 13 GmbH, 07743 Jena (DE)
(72) Inventor: Portugues, Lawrence, 62840 Lorgies (FR); Dentler, Carsten, 61350 Bad Homburg (DE)
(74) Representative: Ackermann, Joachim

(57) **Abstract**

Disclosed is a process for producing hydrogen and a reactor used for this process. The reactor contains a first reaction space for oxidizing metal fuel selected from silicon, magnesium, iron, titanium, zinc, aluminum or alloy containing two or more of these metals with an oxidant and a second reaction space separated from the first reaction space for dehydrogenating hydrogen-containing chemicals into hydrogen and dehydrogenated products.

With the reactor and the process of this invention hydrogen is generated from hydrogen-containing chemicals, such as water and metal fuel is used to generate thermal energy to promote the dehydrogenation reaction.

## Description

### Technical Field

This invention relates to scalable metal-fuel concepts, to a reactor designed for oxidizing metal fuel and to optimized chemical conversions for generating hydrogen from hydrogen-containing chemicals for industrial use.

### Background of the Invention

This invention concerns the growing interest of transporting and storing energy, especially renewable helio-ecological energy and mashing the process streams with the global need of non-petrochemical derived hydrogen.

This invention addresses the need for hydrogen in a helio-energy driven circular economy with optimized energetic volume density transport and efficient release of hydrogen.

Industrial branch standards in fact even grew into global use of charcoal carbon by itself as caloric or chemical feedstock in metallurgical processes practised until today. In such processes minerals especially oxides are reduded to manufacture specific metallurgical phases, such as steel or steel alloys and the reduction of electricity by graphite electrodes in classic aluminium smelters.

On the shoulders of the fossil carbon sources whether gas, refined crude oil or anthracite, all kinds of gasification and liquidation generated an interconnectivity of different manufacturing processes. Guided by the global or local energy prizes this interconnectivity allowed the chemical industry to switch their processes several times after the second world war or under political or block embargoes. As a consequence even hydrogen and food feedstock or fertilizer where made available on that technical-economic basis and more direct procedures, such as electricity-to-fertilizers or hydrogen-to-metals, stepped back.

The urgent need for transported energy to yield or to produce metals regionally in the pure or technical form show their high enthalpic energetic state in a thermodynamic sense and together with their mineral oxides in turn would represent a high volumetric way to store and release chemically. In other words, hydrogen as gas has the highest gravimetric density of heat in combustion energy and the transformation of metals to their oxides perform the highest practical volumetric enthalpic yield per volume in theory of simple abundant earth crust base chemicals.

Most technical industrial high temperature flame processes like the manufacturing of glass, metals or sinter materials can be rebuilt using the hydrogen flame heat or providing hydrogen reduction using electrical arcs by burning it in air or oxygen gas processes. This hydrogen oxidation as a continuous flame is fortunately industrial high temperature standard as many such processes cannot be achieved with electric resistor heat.

This invention demonstrates a new optimized solution for the manufacture of hydrogen by providing a high volume-time yield conversion of stock metal yielding electricity on demand by using an easy and safe transport-infrastructure (global metal/metal-oxide cycle) and by producing hydrogen continuously at the same time from abundant hydrogen-containing chemicals, such as H₂O and a heat source for manageable energy grid use.

### Prior art

The generation of hydrogen by electrolysis of water is a process known for decades. One of the disadvantages of this process is that valuable electric current is needed to split the water into its constituents. Therefore, with the exception of countries having low-cost electricity or surplus electricity from renewable sources the electrolysis process is economically questionable or comes with a high loss of average efficiency. Moreover, the apparatus for conducting electrolysis is of complex construction as oxygen and hydrogen developed in the electrolysis must spatially be separated in order to avoid the generation of explosive oxyhydrogen gas and needs considerable water treatment at low volume-time yield.

It has also been proposed to split water using heat generated in a nuclear reactor. This binds considerable financial ressources up-front and the reactor design including the economically ill need of cooling needing standard energy sources infrastructure by law around it at western standard including other safety measures and the unanswered combustible waste stock is elaborate. As the hydrogen generation is performed in the vicinity of a nuclear reaction there is a substantial risk that the hydrogen contains not neglectable amounts of tritium a most toxicisotope as it is incorporated into all life cells and species even with respect of the short half life with genome aberration, immuned deficiency and tearratogeneicity as known consequences. The release of this radioactive element into the biosphere is to be avoided under any circumstances.

Processes of using metals as fuel converters are generally known.

WO 2014/173991 A1 proposed a full developed chemical-industrial hyperbranch of circles using aluminium as an energy storage material which is reacted with CO₂ to generate thermal energy for caloric grid-energy production and at the same time for converting CO₂ to CO which is used as a base chemical for synthesis of chemicals without a CO₂ burden at production level.

Metal burners using air or oxygen gas with no chemical feedstock transformation are generally known.

In DIS-Vertrags Nr.: 150401 Programm Solarchemie/Wasserstoff; Bundesamt für Energie BFE Schlussbericht Juni 2004; Aluminium als Brennstoff und Speicher; J. Wochele, Dr. Chr. Ludwig; Paul Scherer Institut CH-5232 Villigen results about the Aluminum-Alumina cycle as renewable electric energy storage are reported. Key hurdles for air or oxygen combustion of Aluminum metal to its oxide are disclosed. In this report a flame reactor was proposed and established which has been developed from an aluminum oxidizer. Most interestingly in this analysis it was stated that the biggest loss in such energy cycle would be the carbon electrode itself, so the today established industrial introduction of low abrasive electrodes would yield a reasonable energy-storage-energy cycle per se.

Another group, Trowell, focuses on reacting aluminum in contact with water to release the reaction enthalpy in the form of heat and hydrogen. The result would be instant access to clean power, with no release of greenhouse gases. In a 2018 talk Trowell explains the underlying reactions and potential applications of this technology concept. While laboratory work has shown that the use of metal fuels with heat engines is technically feasible, no one has yet demonstrated the conversion in practice. One concept has been disclosed, for example, by BERGTHORSON, J.M. ET AL.: "Metal-Water Combustion for Clean Propulsion and Power Generation", APPLIED ENERGY, vol. 186, 1 January 2017 (2017-01-01), pages 13 - 27, XP055746514

The next step toward turning the lab findings into usable technology, therefore, will be to build a prototype conversion and couple it to a heat engine, again with a focus to optimize particle conversion at lower temperatues by proposing specialty metal powders including nano-spheres; compare https://www.mcgill.ca/newsroom/- channels/news/could-metal-particles-be-clean-fuel-future, published 2015.

Prof. Jeff Bergthorson of McGill University plans to collaborate with Siemens Energy, Rio Tinto, Teck Resources Limited, Agnico Eagle Mines Limited and Hydro-Québec in a structuring project to develop an alternative technology for the continuous reaction of metals with high-pressure, high-temperature water to generate electricity, hydrogen and/or heat.

All published apparatus designs and results are not indicating that those teams have overcome the scientific prejudice that only supercritical high pressure water vapour equipment using specialty micronized or even nanosize aluminium would allow for a clean hydrogen yield with substantial caloric energy for industrial exploitation.

Bergthorson states that developing metal recycling processes that don't involve CO₂ emissions is also critical; compare https://www.mcgill.ca/newsroom/channels/- news/could-metal-particles-be-clean-fuel-future-257172.

For continuous use all academic or published industrial methods typically only show principles, hurdles and optimize few aspects of a continuous metal-fuel combustion. Fewer technical or academic theoretical considerations show solutions for metal-fuel reactors towards bulk material use and technically scalable processes.

Oxygen burners using special micronized Aluminium yield a stable continuous flame (F. Halter et al. in Applications in Energy and combustion Science, Vol. 13, (2023); https://doi.org/10.1016/j.jaecs.2022.100100). Al, Mg and the Alkali metals and their alloys are reported to show self-sustained air-oxygen reactions from gas propelled powder transport. The reported temperatures indicate the importance of the self sustained kinetic within the flame geometry.

Even fewer tackle the problem of chemical conversion especially hydrogen from water or CO₂ to CO or even further reduction as factual carbon sequestration as an industrial product stream - µ- and nano-structured carbon black powder for large replaceable filler systems such as transport tyre system in the rubber industries today a stoechiometric CO₂ producing industry per black carbon.

WO 2021/228429 A1 discloses the advantage of a liquid metal fuel present in all Al smelting architectures to be dispersed into a reactor with precursor gases containing H₂O or CO₂ and yields reasonable turnover together with the heat introcuced by the liquid aluminium into the system.

As cited above although there is lot of scientific and theoretical hypothesis work about reaction of Al with air, O₂, but especially and more importantly H₂O and CO₂ no technical burner or converter has been described that facilitates a stable flame under continuous dosing of solid Al and which does not plug and in air or oxygen only with the use of a micronized Aluminium preparation or plugging and passivation of the AI-Oxide particles with flame asphyxiation and non self-sustaining flames as outcome.

The use of Al as energy storing material and oxidation with air for heat generation in a pilot scale burner has been investigated in Paul Scherer Institute in Switzerland (compare J. Wochele, Chr. Ludwig; Aluminium als Brennstoff und Speicher. Bundesamt für Energie BFE (2004); https://infoscience.epfl.ch/record/165265).

Even after several steps of optimization the burner blocked although the oxidation of Al with an oxygen containing gas like air is understood to be easier to be conducted than the oxidation without oxygen. The difficulty of perfoming an oxidation of Al with CO₂ or H₂O can be recognized in a review on combustion conditions (compare M. Beckstead; Correlating aluminum burning times. Combust. Explo. Shock Waves 41 (5) (2005) 533-546; https://doi.org/10.1007/s10573-005-0067-2).

The necessity to establish a special "flammable" particle in a circular production of hydrogen from water and AI is reported in CN 10979584 A. Herein not only an atomizing separating step with energy intake and dissipation loss is a necessary attribute but even an in-process control is needed to assure the quality of the water contact phase with the right micronized powder distribution. This is a technology far from scalability and practical time-volume yields in an industrial scale. Furthermore, a corrosion inhibitor is needed to ensure the breaking-down of the passivation shell around any Al-seed or Al-droplets during water steam contact. In other words, CN109795984 A again repeats the technical prejudice by adding compartment device solutions to the different problems created by the low temperature and low enthalpy reaction compared to air and oxygen results in the literature and implements a step-by-step process. From this document no reaction conditions can be derived for a process or reactor that integrate all necessary materials to provide a self-sustained flame phase.

One objective of the present invention is the generation of hydrogen from hydrogen-containing chemicals in a process which is easy to implement using a reactor of simple design.

Another objective of the present invention is the provision of a process of oxydizing selected metals and to use the thermal energy generated in this process for decomposing a hydrogen-containing chemical into its constituents.

Still another objective of the present invention is a reactor that is designed to carry out a process of effectively converting hydrogen-containing chemicals into hydrogen and remnants by using the thermal energy generated by oxidizing selected metals.

### Summary of the invention

Surprisingly it has been found that these objectives can be solved by using a process and a reactor in which in a first reactor compartment metal fuel is oxidized and in which in a second reactor compartment separated form the first compartment a hydrogen-containing chemical is split into its consistuents by using the thermal energy generated in the first compartment.

The present invention relates to a process for producing hydrogen from a hydrogen-containing chemical in a reactor having at least one first reaction space and at least one second reaction space which are separated from each other, wherein in the first reaction space thermal energy is generated by an oxidation reaction and in the second reaction space the hydrogen-containing chemical is decomposed into hydrogen and dehydrogenated product by using the thermal energy generated in the first reaction space. The process of this invention is characterized in that the oxidation reaction in the first reaction space is between a metal fuel selected from silicon, magnesium, iron, titanium, zinc, aluminum or alloy containing two or more of these metals and an oxidant.

The thermal energy generated in the first reaction space that promotes the dehydrogenation reaction in the second reaction space may be heat or a combination of heat and electromagnetic radiation generated by the oxidation reaction in the first reaction space.

In another embodiment the invention relates to a reactor for producing hydrogen from hydrogen-containing chemicals having at least one first reaction space and at least one second reaction space which are separated from each other, wherein in the first reaction space thermal energy is generated by an oxidation reaction between a metal fuel and an oxidant and in the second reaction space the hydrogen-containing chemical is decomposed into hydrogen and dehydrogenated product by using the termal energy generated in the first reaction space, characterized in that the at least one first reaction space is combined with at least one feed line for introducing a metal fuel selected from silicon, magnesium, iron, titanium, zinc, aluminum or alloy containing two or more of these metals.

In a preferred embodiment the reactor of this invention comprises the elements:
A) at least one first reaction space with an inlet zone for a metal fuel selected from silicon, magnesium, iron, titanium, zinc, aluminum or alloy containing two or more of these metals and oxidant, a central zone for reacting the metal fuel with oxidant and an outlet zone for an exhaust gas comprising oxidized metal fuel generated in said first reaction space,
B) at least one feed line for introducing the metal fuel for introducing an oxidant for the metal fuel or for introducing a mixture of metal fuel and oxidant into the inlet zone of the first reaction space,
C) at least one second reaction space with an inlet zone for a hydrogen containing chemical and optionally further reactants, a central zone for dehydrogenating the hydrogen containing chemical and an outlet zone for a product gas generated in said second reaction space or which second reaction space is a cell for electrolysis of the hot hydrogen-containing chemical said cell being placed in total or partially within the first reaction space or said cell being located outside the first reaction space but being connected with a second reaction space placed within the first reaction space, which first and second reaction spaces are separated from each other and are arranged to allow the thermal energy generated in the first reaction space to promote the deydrogenation of the hydrogen-containing chemical in the second reaction space,
D) at least one feed line for introducing the hydrogen-containing chemical, or further reactants or a mixture of hydrogen-containing chemical and further reactants into the inlet zone of the second reaction space,
E) at least one first separation device which is connected to the exit zone of the first reaction space and in which the oxidized metal fuel is removed from the exhaust gas to generate a purified exhaust gas,
F) discharge lines for removal of the oxidized metal fuel and the purified exhaust gas from the first separation device to exit the reactor,
G) at least one discharge line for the product gas or for components of the product gas from the second reaction space to exit the reactor and/or at least one second separation device for separating solid and liquid components of the product gas to generate a purified product gas, which second separation device is connected to the exit zone of the second reaction space and from which the separated solid and liquid components and the purified product gas are discharged via discharge lines to exit the reactor and/or discharge lines for discharging the electrolysis products from the electrolysis cell to exit the reactor,
H) optionally at least one line connecting the outlet zone of the second reaction space with the inlet zone of the second reaction space for recirculation of a portion of the product gas generated within the second reaction space, and
I) at least one heat exchanger for recovering heat generated in the first reaction space or in the material streams exiting the reactor.

### Detailed Description of the Invention

The invention comprises a scalable process and a scalable reactor for the generation of hydrogen for use in decarbonized processes including raw materials and goods such as metals, alloys and inorganic construction materials, such as glass and steel, syngas, synfuel, food chain ingredients as well as chemicals. For this high conversion rates and continuous or quasi continuous operations are needed as well as fast start and shut down typical for large industrial reactors and ovens. Moreover, the process of this invention provides switchable thermal energy which can be used, for example for generation of electrical power for local or grid use.

Standard methods in scaling and gas separation can now be applied using the breakthrough of the invention for high yield and high durability. The hydrogen safety limits are known and well managed in large industrial settings. The metal fuel as well as the circulated transported materials in this economy are extremely inert, and stable in human environment and environmentally friendly. The technology can be handled in all regions of the world and in all economies from local small equipment to large conglomerates and metropoles.

The process of this invention is preferably a continuous process. But the process can also be operated in a batchwise or switchable manner with low ramping times.

The reactor and the process of this invention are scalable within a broad range. Typical scales range from 10 kW to 10 GW, preferably from 50 kW to 1 GW of electrical energy produced from the heat generated by the process or the reactor, respectively.

In case oxygen or air are used as oxidants all the energy generated by burning AI in the the first reaction space is heat and electromagnetic radiation. About 40% to 55% thereof can be converted to electrical power by using a convential power plant.

In case of burning Al with H₂O in the first reaction space about 50% to 60 % of the generated energy is heat and electromagnetic radiation while about 40% to 50 % is chemically bound in H₂. In the second reaction space a share of the heat mentioned above is converted to chemical energy.

The reactor used in the process of this invention comprises at least one first reaction space for the oxidation reaction of a metal fuel as well as at least one second reaction space spatially separated from the first reaction space for the dehydrogenation reaction of a hydrogen-containing chemical, using the thermal energy generated in the metal fuel oxidation reaction to disintegrate the hydrogen-containing chemical into hydrogen and dehydrogenated products

The first reaction space and the second reaction space in the process and the reactor of this invention are separated from each other. This means that there is a physical distance between first reaction space and second reaction space. In one embodiment the reaction spaces are separated by a predetermined distance without a wall between them. In another embodiment the reaction spaces are separated by a predetermined distance from each other by using a wall between them.

In the embodiment without a wall between the reaction spaces the distance between the site of oxidation reaction in the first reaction space and the site of the dehydrogenation reaction of the hydrogen-containing chemical in the second reaction space may range from 0.02 m to 10 m, preferably from 0.05 to 1 m. The distance being measured beween the longitudinal axes of the first and the second reaction spaces.

In the embodiment with a wall between the reaction spaces the second reaction space may be surrounded by the first reaction space or the distance between the site of oxidation reaction in the first reaction space and the site of the dehydrogenation reaction of the hydrogen-containing chemical in the second reaction space may amount up to 10 m, preferably up to 1 m. The distance being measured beween the longitudinal axes of the first and the second reaction spaces.

First and second reaction spaces are arranged in a manner so that the heat or the heat and the electromagnetic radiation generated in the first reaction space can interact directly or indirectly via the wall upon the hydrogen-containing chemical in the second reaction space.

In a preferred embodiment of the process and the reactor of this invention at least one mirror is present in the first reaction space that concentrates or directs the electromagnetic radiation generated in the first reaction space towards or back into the second reaction space.

The dehydrogenation of the hydrogen-containing chemical takes place in the second reaction space. This is promoted by the thermal energy generated in the first reaction space. In a preferred embodiment of the process and the reactor of this invention the dehydrogenation of the hydrogen-containing chemical is supported by using electrical power to split the hot hydrogen-containing chemical into hydrogen and dehydrogenated product. Electrolysis can take place in an electrolytic cell placed at different locations in the reactor as explained above.

In one embodiment the process of this invention is carried out in a tubular reactor having at least one first reaction space with an inlet zone for reactants, a reaction zone for the oxidation reaction and an outlet zone for an exhaust gas, and having at least one second reaction space with an inlet zone for reactants, a reaction zone for reacting the reactants and an outlet zone for a product gas, wherein the first reaction space and the second reaction space are separated from each other by a predetermined distance without a wall between the reaction spaces or wherein the first reaction space and the second reaction space are separated from each other by a wall, wherein the first reaction space surrounds the second reaction space or wherein the second reaction space surrounds the first reaction space.

Preferred are a process and a tubular reactor having one first reaction space surrounding one or more second reaction spaces. The first reaction space may be formed by a first tube which contains one or more second tubes forming the second reaction space(s), said second tube(s) traversing in longitudinal direction the interior of the first tube forming the first reaction space. In case of two or more second tubes present in the first tube having a cylindrical shape these second tubes may be arranged in a parallel manner along the longitudinal cylinder axis of the first reaction space or these second tubes may be arranged in a circular manner around the longitudinal cylinder axis of the first reaction space. The tubes forming the second reaction space may have elements of improving the heat transfer from the first reaction space to the second reaction space. Examples thereof are metal fins attached to said tubes.

The second reaction space may be an empty space guiding the hydrogen-containing chemical which is dehydrogenated by the thermal energy generated in the first reaction space. In an alternative embodiment, the second reaction space contains one or more catalysts for the dehydrogenation reaction. Nature and form of the catalyst are chosen by the skilled artisan depending on the type of reaction taking place in the second reaction space.

Also preferred are a process and a tubular reactor having one second reaction space surrounding one or more first reaction spaces. The second reaction space may be formed by a first tube which contains one or more second tubes forming the first reaction space(s), said second tube(s) traversing in longitudinal direction the interior of the first tube forming the second reaction space. In this embodiment the first and second tubes can be arranged as set forth in the above paragraph.

In one embodiment the process of this invention comprises at least the steps:
a) introducing metal fuel selected from silicon, magnesium, iron, titanium, zinc, aluminum or alloy containing two or more of these metals, an oxidant for the metal fuel and optionally an inert gas into the inlet zone of the at least one first reaction space,
b) reacting the metal fuel and the oxidant in the at least one first reaction space thereby providing a flame temperature of at least 700°C, preferably of at least 1500°C, generating an exhaust gas comprising oxidized metal fuel and thermal energy,
c) discharging the exhaust gas from the outlet zone of the at least one first reaction space into at least one first separation device,
d) separating the oxidized metal fuel from the exhaust gas in the at least one first separation device, thereby producing a purified exhaust gas ,
e) discharging the oxidized metal fuel and the purified exhaust gas from the at least one first separation device to exit the reactor,
f) introducing a hydrogen-containing chemical and optionally a metal fuel selected from silicon, magnesium, iron, titanium, zinc, aluminum or alloy containing two or more of these metals and/or optionally an inert gas into the in the inlet zone of the at least one second reaction space,
g) reacting the hydrogen-containing chemical in the at least one second reaction space to form a product gas by dehydrogenation of the hydrogen-containing chemical into hydrogen and dehydrogenated products using the thermal energy produced in the at least one first reaction space, or treating the hot hydrogen-containing chemical with electrical power in an electrolysis cell being placed in total or partially within the first reaction space or being located outside the first reaction space but being connected with a second reaction space placed within the first reaction space to generate hydrogen and dehydrogenated products,
h) optionally recirculating a portion of the product gas from the outlet zone of the second reaction space into the inlet zone of the second reaction space,
i) separating the components of the product gas from each other by
   - causing one of the components in the product gas to permeate through the wall of the second reaction space and by discharging the remaining product gas through the outlet zone of the second reaction space to exit the reactor, or
   - discharging the product gas through the outlet zone of the second reaction space into at least one second separation device wherein solid and liquid components of the product gas are separated and a purified product gas is obtained and the separated components and the purified product gas are discharged from the second separation device to exit the reactor or
   - discharging the hydrogen and the dehydrogenated products generated by electrolysis from the electrolysis cell to exit the reactor, and
j) recovering thermal energy contained as excess heat in the first reaction space and/or in the material streams exiting the first separation device and/or the second separation device, the second reaction space and/or the electrolysis cell by cooling the reactor jacket by means of a heat transfer medium and/or by conducting the material streams through one or more heat exchangers.

In step a) of the process of this invention an oxidant and metal fuel selected from silicon, magnesium, iron, titanium, zinc, aluminum or alloy containing two or more of these metals is introduced into the inlet zone of the first reaction space. Silicon which is a metalloid is designed in this application as a metal.

As oxidants oxygen, air or other oxygen-containing gases can be used in step a). Preferred oxidants are oxygen, air, H₂O and/or CO₂, very preferred oxidants are oxygen or air.

Besides the metal fuel and the oxidant inert gases can be introduced in step a) into the first reaction chamber. Examples of inert gases are nitrogen and argon. Inert gases can be used to control the temperatures generated in the first reaction space.

In step b) of the process of this invention the metal fuel and the oxidant are reacted in the first reaction space thereby generating an exhaust gas comprising oxidized metal fuel and thermal energy. The energy generated in step b) results in a flame temperature in the first reaction space of at least 700°C. The temperatures in the first reaction space can be determined by using a thermocouple located a radiation thermometer. The flame temperature is determined by using a radiation thermometer directed towards the site of the flame with the highest luminosity. Preferably the flame temperature in the first reaction space is 1000°C or higher, more preferred 1200°C or higher, still more preferred between 1500 and 3500°C and most preferred between 2500 and 3200°C in order to receive a sustained flame in a continuous transforming turnover plateau.

Metal fuel, oxidant and optionally inert gas(es) can be introduced via separate feed lines into the inlet zone of the first reaction space. In an alternative embodiment metal fuel, oxidant and optionally inert gas(es) are introduced as mixtures via one or more feed lines into the inlet zone of the first reaction space.

Steps a) and b) are preferably carried out in a continuous manner. Thus, the reactants are continuously or intermittently fed to the first reaction space and the oxidation reaction takes place in a continuous manner. In a batchwise process it is possible to carry out step a) followed by reacting metal fuel and oxidant in step b).

Metal fuel can be used in the form of powder, chips, pellets, granules, strips, wires, ingots or strands, preferably in the form of a powder with particles of diameters of less than 150 µm, more preferred with a fraction of particle diameters of less than 150 µm and most preferred of lower than 30 µm or in the form of dispersed liquid. Metal fuel is preferably injected through continuous or discontinuous feeds into the reactor, optionally using airlocks.

Metals used in the process of this invention are silicon, magnesium, iron, titanium, zinc or preferably aluminium. As an alternative alloys containing two or more of these metals can be used. Examples of alloys are Aluminium-Magnesium alloys and Silicon-Aluminium alloys.

Metal fuel can by prepared from the corresponding oxides by melt electrolysis, preferably by using electricity from regenerative sources, such as photovoltacis or wind energy. Metal fuel can also be used as metal scrap, preferably as Aluminium scrap from the existing circular aluminium economies.

The oxidation of the metal fuel in a flow-through reactor is particularly preferred to occur in a gas-solid mixture with a predominant flow of oxygen or air mixed with metal particles and optionally with inert gases. The oxidation of the metal fuel preferably occurs in the presence of oxygen gas. Optionally inert gases can be present in the gas-solid mixture in order to dilute the reactants.

The metals or metal alloys used as a metal fuel in the reaction of this invention are available as a metallic raw material on an industrial scale and represent an alternative to other transportable energy sources. The metals or metal alloys are inert and non-hazardous to store and transport. This gives these metals or metal alloys a significant advantage as an energy source over crude oil, natural gas or coal, which are factual hazardous to the environment from their exploitation, their refinement, distribution and transport as well as their downstream use, end-of pipe waste dilution and circularity.

By the oxidation of the metal fuel in step b) an exhaust gas containing solid metal oxide(s) and gaseous constituents, such as unreacted oxygen or inert gases is obtained. The exhaust gas is discharged from the outlet zone of the first reaction space into one or more first separation device(s).

In step c) the exhaust gas is discharged from the first reaction space exit zone via a discharge line and is introduced into a first separation device. One or more discharge lines may be present which discharge into one or more first separation devices. Preferably one discharge line is present which discharges into one first separation device.

Different separation devices can be used. These devices are known to the skilled artisan in the field of flue gas purification.

Examples for separation devices are centrifugal separators, known as cyclones, or as fabric filters or as electrostatic precipitators or as ceramic filters. Preferred separation devices are cyclones.

In step d) the oxidized metal fuel particles contained in the the exhaust gas are removed in the first separation device, thereby producing a purified exhaust gas having no or a reduced particle content. Preferably at least 90 weight-%, more preferred more than 99 weight-% of the particles present in the exhaust gas entering the first separation device are removed by this device.

In step e) the oxidized metallic fuel and the purified exhaust gas are discharged from the first separation device(s) to exit the reactor.

The second reaction space is organized in an inlet zone for reactants, a reaction zone for dehydrogenating the hydrogen-containing chemical resulting in a product gas and an outlet zone for the product gas.

In step f) of the process of this invention a hydrogen-containing chemical and optionally a metal fuel selected from silicon, magnesium, iron, titanium, zinc, aluminum or alloy containing two or more of these metals and/or optionally an inert gas is introduced into the inlet zone of the second reaction space.

As hydrogen-containing chemicals arbitrary chemicals can be used, provided these contain chemically bonded hydrogen. Examples thereof are H₂O, NH₃, urea, hydrazine, phosphines, silanes, boranes and organic compounds containing carbon and covalently attached thereto hydrogen. Examples of organic compounds are hydrocarbons, alcohols, e.g. fatty alcohols, amines, amides, esters, carboxylic acids, e.g. fatty acids, ketones, aromatic compounds and hydrocarbons. Organic compounds may be monomers, oligomers or polymers. Organic compounds may be saturated or unsaturated or aromatic. Organic compounds may contain - besides carbon and hydrogen atoms - oxygen, nitrogen, sulfur or phosphorous atoms. Mixtures of different hydrogen-containing chemicals can be used.

Preferred hydrogen-containing chemicals are H₂O, NH₃, alcohols, carboxylic acids and hydrocarbons, such as C₁-C₁₂-hydrocarbons, preferably H₂O, methan, ethane, ethylene, methylcyclohexane, methanol, ethanol, formic acid and acetic acid, fatty acids, e.g. carboxylic acids with 6-20 carbon atoms, fatty alcohols, e.g. aliphatic alcohols wich 6-20 carbon atoms and aromatic compounds.

In addition to hydrogen-containing chemicals the reactant mixture in the second reaction space may contain oxidants for metal fuel, such as O₂, CO₂, CO or SO₂.

Very preferred hydrogen-containing chemicals are H₂O, NH₃ and H₂O, CO₂ and H₂O, hydrocarbons, fatty acids, esters of fatty acids or alcohols or said chemicals diluted with inert gases.

H₂O is available from known sources. All kinds of water from all kinds of sources can be used. Fresh water can be used as well as salt water and recycled waste water, especially with potential bio-burden limitations for commercial use. Preferred is fresh water. H₂O can be fed into the second reaction space as water vapour or as water mist. Preferred is water vapour.

Oxidant CO₂ can be obtained from atmospheric gas, from combustion processes of all kinds or from other sources, and thus be removed from the atmosphere or industrial cycles. The process of this invention therefor has the advantage that no CO₂ is produced in the associated energy production, but is actually consumed. The resulting metal oxide is collected and highly inert and does not lead to any environmental pollution.

Organic compounds can be obtained from chemical feedstock or from natural sources, such as from mineral oil or natural gas, non decarbonizable feedstock such as nutrition, agro-alimentary waste and chemical-pharmaceutical waste such as used solvents and residuals incinerated today.

The resulting reaction products hydrogen, dehydrogenated products and remnants, such as oxygen, cabon monoxide or elemental carbon can be hazardous materials. However, extraction, handling and storage of hazardous materials have been possible for a long time and, in particular, according to the process technologies used in the chemical industry today, without any problems and in compliance with appropriate safety standards. The risk potential of carbon monoxide and hydrogen or of mixtures of hydrogen and oxygen is thus on a par with that of other hazardous chemical substances. The reaction product(s) hydrogen, carbon monoxide and elemental carbon can be advantageously used in many industrial processes. Hydrogen can be used in many reduction processes, for example to produce metals, such as iron, from metal oxides, or to carry out hydrogenations of organic compounds. Hydrogen can also be used as a fuel or as a source of thermal energy. Mixtures of carbon monoxide and hydrogen can be used in many industrial processes to produce energy-rich hydrocarbon compounds, such as for the production of fuels, e.g. kerosene. Increased use of the process of the invention can provide carbon monoxide and hydrogen fuel for industrial purposes. Elemental carbon can be used as carbon black in many industrial applications and is a irreplaceable constituent of rubber materials such as tyres in the aviation and transport sector.

The combustion of hydrocarbons from the reaction products of carbon monoxide and hydrogen would in turn provide carbon dioxide, which can again be fed to the process according to the invention or when generated in this process is at least CO₂-footprint neutral. The essential advantage of the process according to the invention thus consists in a universally, decentrally and rapidly applicable hydrogen and energy generation, without additional CO₂ pollution of the environment caused thereby, whereby the reaction product(s) hydrogen or mixtures of hydrogen and carbon monoxide can be fed to a material cycle.

Nitrogen as inert transport gas for dilution and flame process control will not lead to the undesired NOx-problem of oxygen-rich burners. This is an important quality and advantage of the high temperature process of this invention as the metal proved to capture oxygen at these reaction kinetics and temperature.

Reactants NH₃ and urea are also available from known sources. NH₃ and urea can be used as sources of hydrogen.

The oxidation reaction(s) in the first reaction space and optionally in the second reaction space generate large amounts of thermal energy in the form of heat and electromagnetic radiation and therefore high temperatures are present in the these reaction spaces. This avoids formation of nitrogen oxides as by-products from the nitrogen generated by NH₃ or urea decomposition.

The metal fuel optionally introduced in step f) into the second reaction space is selected from silicon, magnesium, iron, aluminum or alloy containing two or more of these metals.

Optionally an inert gas is introduced into the inlet zone of the second reaction compartment(s). This may be used to dilute the reaction mixture and to control the reaction speed and the amount of thermal energy generated.

Metal fuel introduced in one embodiment of step f) can be in the form of powder, granules, strips, wires, ingots or strands, preferably through continuous or discontinuous reactor feeds, optionally using airlocks. Preferred are powders of metals or powders of metal alloys. A preheated injection of dispersed liquid aluminium is another way for small volume particles or drops to be oxidized in this high temperature local burst transformation.

Metal fuel introduced in one embodiment of step f) can be the same as metal fuel introducted in step a).

In step g) the hydrogen-containing chemical is reacted in the at least one second reaction space to form a product gas by dehydrogenation of the hydrogen-containing chemical into hydrogen and dehydrogenated products and optionally oxidized metal fuel. For executing the dehydrogenation reaction in step g) heat and electromagnetic radiation produced in the first reaction space is used. First and second reaction spaces are separated from each other and are energetically interconnected. This can be attained by using one or more tubes having thermally conducting and radiation translucent or radiation impermeable walls traversing the first reaction space. The interior of said tubes forms the second reaction space.

In an alternative embodiment first and second reaction spaces are also separated from each other and are energetically interconnected. Here the site of the oxidation reaction in the first reaction space is separated by a predetermined distance from the site of the second reaction space. In this embodiment both reaction spaces are spatially separated with no material wall being located between them. Here thermal energy generated in the first reaction space acts directly on the reactants in the second reaction space.

If a metal fuel is used in step g) an oxidant is introduced into the second reaction space. This may by a hydrogen-containing and oxygen-containing compound, such as H₂O, which concurrently serves as a hydrogen-containing chemical for hydrogen generation. Or the oxidant may be a non-hydrogen-containing but oxygen-containing compound, such as CO₂ or CO. The oxidation of the metal fuel in step g) preferably occurs in a gas-solid or gas-liquid mixture with a predominant flow of oxygen or air mixed with metal particles. The oxidation of the metal fuel in step g) preferably occurs in the presence of oxygen gas, H₂O, CO₂, CO or mixtures of two or more of these gases. Optionally inert gases can be present in the gas-solid mixture in order to dilute the reactants.

By the oxidation of the metal fuel in one embodiment of step g) a product gas containing metal oxide(s) and gaseous components, such as unreacted oxygen or inert gases is obtained. The product gas is discharged from the outlet zone of the second reaction space into one or more second separation device(s).

In one embodiment of the process of the invention in a step h) a portion of the product gas is recirculated from the outlet zone of the second reaction space into the inlet zone of the second reaction space. This helps to improve the completeness of the dehydrogenation reaction of the hydrogen-containing chemical in the second reaction space.

In step i) of the process of this invention the components of the product gas are separated from each other by discharging the product gas through the outlet zone of the second reaction space into one or more second separation devices wherein the solid and liquid particles of the product gas are separated to generate a purified product gas and the separated particles and purified product gas are discharged from the second separation devices to exit the reactor.

As second separation devices the same equipment can be used as described for the first separation devices. Preferably one or more cyclones are used as second separation devices.

In an alternative embodiment of step g) no metal fuel is oxidized but hydrogen-containing chemicals are dehydrogenated into hydrogen gas and dehydrogenated products which can be gaseous, liquid or solid. Examples of dehydrogenation reactions forming gaseous constituents only are the decomposition of H₂O into hydrogen and oxygen, or of NH₃ into hydrogen and nitrogen, or of methanol into hydrogen, formaldehyde, methane, carbon monoxide , carbondioxide, and dimethyl ether. Examples of dehydrogenation reactions forming solid and gaseous constituents are the decomposition of hyrocarbons or food waste, such as fatty acids and fat, into hydrogen and elemental carbon.

If in step g) of the embodiment using no metal fuel a product gas comprising solid and liquid components are produced these components can be separated from the product gas in step i) as described for the embodiment using metal fuel in step g). Thus, the product gas is discharged from the outlet zone of the second reaction space into one or more second separation device(s), wherein the solid or liquid components of the product gas are separated to generate a purified product gas and the separated components and the purified product gas are discharged from the second separation device(s) to exit the reactor.

If in step g) of the embodiment using no metal fuel a product gas having gaseous products only are generated these products can be separated from each other in step i) by causing one of the gaseous products in the product gas to transgress through the wall of the second reaction space(s) and by discharging the remaining product gas through the outlet zone of the second reaction space(s) to exit the reactor. In an alternative embodiment the product gas can be removed from the second reaction space to exit the reactor and the components of the product gas are separated outside the reactor or are used without separation outside the reactor for chemical processing or for generation of thermal energy.

In step j) a portion of the thermal energy generated in the first reaction space and/or contained in the materials streams exiting the reactor is transferred into a heat transfer medium. This is achieved by means of one or more heat exchangers connected with different components of the reactor. The heat exchanger(s) may be connected with the reactor jacket and/or with the discharge lines for the materials streams exiting the reactor.

Heat transfer media used in the heat exchanger(s) are known to the skilled artisan. Examples of heat transfer media are water, glycols, glycerine, molten metals, molten salts or thermal oils, such as silicones or high-boiling hydrocarbons. Preferred heat transfer media are water, thermal oils or molten salts.

The thermal energy contained in the heat transfer media can be supplied to an exploiting consumer. Exploiting consumers can be almost all technical and chemical energy converters. In particular, low-pressure or high-pressure steam turbines for power generation, Stirling engines and other heat engines or direct power generators on temperature gradients, thermolysis reactors, in particular reactors for water thermolysis to hydrogen can be mentioned as exploiting consumers.

The hydrogen, dehydrogenized products and other components contained in the product gas generated in the reaction of this invention may be stored after exit from the reactor or may be fed to a plant for chemical conversion. The generated energy can be dissipated for energy conversion or heat or cold generation

In a specific embodiment of the process of this invention a portion of the heat generated in the process is recycled to the reactants introduced into the reactor. These measures result in an increase of temperature of the reactants fed to the reactor. This minimizes the energy needed to ignite the reactants and increases the product yield.

Depending on the nature of the product gas different work-up procedures can be used in step i).

In preferred embodiments of the process of this invention the hydrogen contained in the product gas can be separated from the product gas by performing one of the steps i1), i2), i3), i4) or i5).

In step i1) the hydrogen and the other components of the product gas in the second reaction space are separated from each other by introducing the hydrogen or the other components into the first reaction space via the wall separating the second reaction space from the first reaction space and by discharging that portion of the product gas that remains in the second reaction space via the outlet zone of the second reaction space to exit the reactor. The product transferred from the second reaction space into the first reaction space can be used - dependent on the nature of the product - to promote the oxidation reaction of the metal fuel in the first reaction space. For example, if oxygen passes through the wall separating the second from the first reaction space this oxygen is used to react with the metal fuel in the first reaction space and to generate heat and electromagnetic radiation which in turn support the dehydrogenation of the hydrogen-containing compound in the second reaction space. The hydrogen remaining in the second reaction space will be discharged via a discharge line from the second reaction space to exit the reactor. In another example, if hydrogen passes through the wall separating the second reaction space from the first reaction space this hydrogen may be used to react with a surplus of oxidant present in the first reaction space or may remain unreacted and becomes discharged with the exhaust gas from the reactor. Oxygen or other dehydrogenated products remaining in the second reaction space may be discharged via a discharge line from the second reaction space to exit the reactor.

In step i2) the hydrogen and the other components of the product gas present in the second reaction space are separated from each other by introducing the hydrogen or the other components of the product gas from the second reaction space into a discharge space that is located between the first reaction space and the second reaction space and is formed by two walls separating the first reaction space from the discharge space and separating the second reaction space from the discharge space. The hydrogen or the other components of the product gas is fed from the discharge space via a discharge line to exit the reactor. The product gas that remains in the second reaction space without the product that was transferred into the discharge space is discharged via a discharge line connected with the outlet zone of the second reaction space to exit the reactor.

In step i3) the product gas containing only gaseous products is discharged via the oulet zone of the second reaction space into one or more second separation devices to separate the gaseous products from each other and to cause said separated products to exit the reactor. This can be carried out by using one or more membrane separation apparatus to separate the different gaseous products from each other.

In step i4) the product gas containing gaseous products and solid and liquid components is fed from the outlet zone of the second reaction space via a discharge line into one or more second separation devices to separate the gaseous products and the and solid and liquid components from each other and to cause said separated products and components to exit the reactor. This can be carried out by using one or more cyclones as second separation devices.

In step i5) the electrolysis products generated in the electrolysis cell are caused to exit the reactor.

In a very preferred embodiment of the process of this invention the components contained in the product gas are separated from each other in step i) by performing one of the steps i6), i7), i8) or i9), wherein
in step i6) oxygen is separated from the other components contained in the product gas by causing the oxygen to permeate from the second reaction space into the first reaction space via the wall separating the two reaction spaces from each other, preferably via a wall made by oxygen-conducting ceramic, and by discharging the oxygen-depleted product gas that remains in the second reaction space via the outlet zone of the second reaction space to exit the reactor, or wherein
in step i7) hydrogen is separated from the other components contained in the product gas other by introducing the hydrogen of the product gas from the second reaction space into a discharge space that is located between the first reaction space and the second reaction space and is formed by two walls separating the first reaction space from the discharge space and separating the second reaction space from the discharge space, that the hydrogen is discharged from the discharge space to exit the reactor and that the hydrogen-depleted product gas that remains in the second reaction space is discharged via the outlet zone of the second reaction space to exit the reactor, or wherein
in step i8) the product gas consisting essentially of hydrogen and oxygen is discharged via the oulet zone of the second reaction space into at least one second separation device to separate the hydrogen from the oxygen and to cause said separated constituents to exit the reactor, or wherein in step i9) the product gas consisting essentially of hydrogen and oxidized metallic fuel and/or solid carbon is discharged from the outlet zone of the second reaction space into at least one second separation device to separate the hydrogen and the other components from each other and to cause said separated hydrogen and other components to exit the reactor.

In a preferred embodiment of the process of this invention the metal fuel introducted into the reactor is in the form of a powder and the metal powder forms a swirl in the first reaction space and optionally in the second reaction space progressing from the inlet zone via the reaction zone to the outlet zone of said reaction space(s).

In another preferred embodiment of the process of this invention in addition to H₂O a metal fuel selected from silicon, magnesium, iron, titanium, zinc, aluminum or alloy containing two or more of these metals is introduced into the second reaction space, preferably a powder of aluminium-magnesium alloy, aluminium or magnesium.

In a preferred process variant the first separation device and the second separation device are one or more cyclones.

In another preferred process variant the dehydrogenation of the hydrogen-containing chemical in the second reaction space is a pyrolysis of a hydrocabon into hydrogen and solid elemental carbon, preferably the pyrolysis of a C₁-C₁₀ hydrocarbon mixture, most preferred of methane, ethane, ethane, propane or propene.

In this process variant the separation of the hydrogen from the solid elemental carbon is preferably performed by using one or more cyclones.

In still another preferred process variant the dehydrogenation of the hydrogen-containing chemical in the second reaction space is a dehydrogenation of H₂O into hydrogen and oxygen and/or a dehydrogenation of NH₃ into hydrogen and nitrogen, preferably a dehydrogenation of H₂O into hydrogen and oxygen which is promoted by electrolysis.

In this process variant the separation of the hydrogen from the oxygen is preferably performed by using a wall separating the second reaction space from the first reaction space which wall is permeable for oxygen but not for hydrogen thus allowing the oxygen to permeate through said wall into the first reaction space, preferably a wall made of oxygen-conducting ceramic material, said permeated oxygen being used in the first reaction space as a reactant for the metal fuel.

In another embodiment of this process variant the separation of the hydrogen from the oxygen or nitrogen is performed by introducing the hydrogen from the second reaction space into a discharge space that is located between the second reaction space and the first reaction space, to discharge the hydrogen from said discharge space to exit the reactor and to discharge the hydrogen-depleted product gas that remains in the second reaction space via the outlet zone of the second reaction space to exit the reactor, wherein said discharge space is formed by a first wall separating the first reaction space from the discharge space and by a second wall separating the second reaction space from the discharge space, wherein the second wall is permeable for hydrogen but not for oxygen and nitrogen, preferably made from nickel or a nickel-containing alloy, thus allowing the hydrogen to diffuse through said wall into the discharge space and wherein the first wall is not permeable for hydrogen, preferably made from iron or an iron-containing alloy, thus allowing the hydrogen to become collected in the discharge space.

In another preferred process variant the dehydrogenation reaction in the second reaction space is a reaction between particulate metal fuel and H₂O or H₂O and NH₃ or H₂O and CO₂ to oxidized metal fuel and hydrogen or to oxidized metal fuel, hydrogen and nitrogen or to oxidized metal fuel, hydrogen and CO.

In this process variant the separation of the hydrogen or of the hydrogen and the nitrogen or of the hydrogen and the CO from the oxidized metal fuel is preferably performed by using one or more cyclones.

In another preferred embodiment of the process of this invention the hydrogen-containing chemical introduced into the second reaction space is H₂O and the dehydrogenation reaction is an electrolysis of the H₂O at a temperature between 700 and 1500°C into hydrogen and oxygen, said electrolysis being performed an electrolysis cell placed in total or partially within the first reaction space or being located outside the first reaction space but being connected with a second reaction space placed within the first reaction space or that the dehydrogenation reaction is a thermolysis of the H₂O at a temperature between 1700 and 3200°C into hydrogen and oxygen, said thermolysis being performed in the second reaction space.

In still another preferred embodiment of the process of this invention a portion of the product gas from the outlet zone of the second reaction space is recirculated into the inlet zone of said second reaction space.

In a preferred embodiment of the process of this invention heat generated in the reactor is transferred to a heat transfer medium running through a heat exchanger which is connected with the reactor jacket surrounding the reactor and/or heat of one or more material streams exiting the reactor is transferred to a heat transfer medium running through one or more heat exchanger(s) arranged at the lines conducting said materials streams. Such heat exchangers may be arranged downstream the outlet of the first reaction space and/or downstream the outlet of the second reaction space and/or downstream the first separation device and/or downstream the second separation device and/or downstream the electrolysis cell.

In a preferred embodiment of this process variant a stream containing hot oxidized metal fuel is introduced into a heat exchanger located downstream the first separation device and/or the second separation device.

In another preferred embodiment of this process variant hot purified product gas is introduced into a heat exchanger located downstream the outlet zone of the second reaction space for cooling said purified product gas and feeding heat contained in said purified product gas to a heat transfer medium, or hot purified product gas is fed from the reactor into a chemical reactor for carrying out reduction reactions with the hydrogen contained in the purified product gas or for reacting the hydrogen contained in the purified product gas with carbon monoxide.

Preferred is a process, wherein the metal used as metal fuel has been produced from metal oxides without generating CO₂, preferably in a fused-salt electrolysis plant, which has no carbon electrodes.

The process of this invention is performed without any contact with radioactive material, such as e.g. a hydrogen generation from water that is performed using heat of a nuclear reactor. Therefore, the process of this invention is characterized in that the hydrogen produced in the process is free of tritium.

In another preferred embodiment of the process of this invention step a) is divided into steps a1) and a2) and step b) is divided into steps b1) and b2), wherein
a1) metal main fuel selected from silicon, magnesium, iron, titanium, zinc, aluminum or alloy containing two or more of these metals and an oxidant for the metal main fuel is introducted into the inlet zone of the at least one first reaction space via one or more common feed lines or via separate feed lines,
a2) particles of metal secondary fuel and oxidant or hydrogen and oxidant or mixtures of two or more of said particles, hydrogen and oxidant are introduced into the inlet zone of the at least one first reaction space using one or more common or separate feed lines ending in said inlet zone and generating a mixture of said particles and oxidant or of said hydrogen and oxidant at the end of said feed lines,
b1) a first flame is generated by oxidizing the mixture of particles of metal secondary fuel and oxidant or of hydrogen and oxidant at the end of said feed lines which first flame is directed towards the metal main fuel present in the first reaction space, and
b2) a reaction zone is generated by the action of said first flame by melting and/or evaporating a portion of said metal main fuel thereby causing said metal main fuel to react with the oxidant to generate a second flame resulting in an oxidized metal main fuel, heat and electromagnetic radiation.

In step a2) of the process of this invention particles of metal secondary fuel and oxidant or hydrogen and oxidant or mixtures of two or more of said particles, hydrogen and oxidant are introduced into the inlet zone of the reactor.

As metals for the metal secondary fuel the same metals can be used as for the metal main fuel. Thus silicon, magnesium, iron, titanium, zinc and preferably aluminium particles or particles of alloys of two or more of these metals can be used. But for the metal secondary fuel other metals can be used.

In an embodiment of the process of this invention different metals may used to generate the high atomizing vapour metal main fuel zone for the reaction. Particulate metals, such as Mg, Si, Fe, Ti, Ca, Va, Ge, Ni, Mn, Zn and Sn may be used for generating the first flame to provide the overall two stage vapourizing action by the interplay between first and second flame. Preferably Si, Mg, Fe, Ti, Zn or Al are used for generating the first flame, most preferred is Al.

In a preferred embodiment of the process of this invention the same metals are used for generating the first and the second flame. Most preferred Al is used for generating the first and the second flame. Al may be obtained from recycling processes and may comprise treatment impurities.

Generally metal particles used in step b1) and optionally in step b2) have diameters below 150 µm, preferably with a fraction below 30 µm. A preferred diameter range for metallic particles is between 150 nm and 10 µm.

As oxidants oxygen, air or oxygen-containing gases can be used in steps b1) and b2). Preferred oxidants are oxygen, air, H₂O and/or CO₂. Most preferred are O₂ and air.

Particles of metal secondary fuel and oxidant or hydrogen and oxidant can be introduced via separate feed lines into the reactor inlet zone. In an alternative and preferred embodiment mixtures of particles of metal secondary fuel and oxidant or of hydrogen and oxidant are introduced via common feed line(s) into the reactor inlet zone.

The feed line(s) for metal secondary fuel and oxidant or for hydrogen and oxidant terminate within the reactor inlet zone and the feed stream(s) of metal secondary fuel and oxidant or of hydrogen and oxidant are oriented in a manner that separate feed streams of metal secondary fuel and oxidant or of hydrogen and oxidant mix at the end of said line(s) within the reactor inlet zone. This mixture of metal secondary fuel and oxidant or of hydrogen and oxidant is ignited by means of an ingnition device to generate a first flame at the location of the metal secondary fuel-oxidant or of the hydrogen-oxidant mixture.

In an alternative and preferred embodiment the metal secondary fuel-oxidant mixture or the hydrogen-oxidant mixture is generated outside the reactor and is provided via feed line(s) into the reactor inlet zone.

At the end of the feed line(s) the mixture of metal secondary fuel and oxidant or of hydrogen and oxidant is ignited in step b1) by means of an ingnition device to generate a first flame at the location of the metal secondary fuel-oxidant or of the hydrogen-oxidant mixture.

Different ignition devices can be used for igniting the mixture of metal secondary fuel and oxidant or of hydrogen and oxidant to generate the first flame in step b1) or to ignite the fuel-oxidant mixture in the first reaction space. Ignition devices are known to the skilled artisan.

Examples of ignition devices are pilot flames generated by burning hydrocarbons, e.g. acetylene, and oxygen or air, electric arcs, inductive heaters, lasers, plasma generators or other devices generating electromagnetic radiation.

The ignition device used to ignite the fuel-oxidant mixture in step b1) is preferably an electric arc or a pilot flame arranged in the inlet zone of the first reaction space, an inductive heater or a laser arranged outside the reactor, the radiation of which is coupled into the first reaction space through one or more windows in the reactor jacket, so that the pilot flame, electric arc, inductive heater and/or laser radiation act on the metal secondary fuel and oxidant or on the hydrogen and oxidant introduced in step a2). These ignition devices can also be used in other embodiments of the process of this invention to ignite metal fuel-oxidant mixtures present in the first reaction space

Preferably the temperatures generated by reaction in step b1) cause evaporation of at least a portion of the metal main fuel.

In a preferred step a2) a hydrogen-oxygen mixture, a hydrogen-air mixture, a hydrogen-chlorine mixture, an acetylene-air mixture or a mixture of metal particles with diameters of less than 150 µm and oxygen, oxygen-containing gas or water vapor is introduced.

In a preferred embodiment of the process of this invention the metal fuel and oxidant or the hydrogen and oxidant introduced into the first reaction space are fed into the inlet zone of the first reaction space via one or more axially and/or radially and/or tangentially extending pipes, preferably into a cylindrical first reaction space.

Very preferred the introduction of metal fuel and oxidant or the hydrogen and oxidant or the oxidant only into the inlet zone of the first reaction space takes place via a plurality of pipes tangentially extending through a cylindrically reactor jacket, as a result of which a vortex is formed in the first reaction space which encloses the flames generated in the first reaction space and moves from the inlet zone via the reaction zone towards the outlet zone.

The first flame generated in step b1) is used to generate in step b2) a second flame which forms a reaction zone by reaction of metal main fuel with oxidant. Thus, the first flame triggers the main reaction by igniting the metal main fuel to react in an oxidation reaction. By this a second typically larger flame is formed.

In step b2) a reaction zone in the first reaction space is generated by the action of the first flame by melting a portion of the metal main fuel thereby causing said metal main fuel to react with the oxidant to generate a second flame resulting in an exhaust gas containing gaseous components and oxidized metal.

Thus, step b1) is used to provide ignition of the metal main fuel only and may be terminated after the second flame has been established. As an alternative, step b1) may be continued after said ignition during the main reaction between metal main fuel and oxidant in order to support the stability of the second flame even under turbulent conditions.

In a preferred embodiment of the process of this invention a local temperature in the first flame in the range between 2500 and 3500°C, preferably between 2500 and 3200°C is generated. This will guarantee an ignition of the metal main fuel and formation as well as propagation of the the second flame. The temperatures of the flames in the reactor are determined as described above. The radiation generated by the oxidation reaction in the reactor may be observed via a window in the reactor jacket.

In a preferred embodiment the second flame generates temperatures within the metal main fuel that at least a portion of said metal main fuel evaporates. In this embodiment the process conditions are chosen in a manner, so that the second flame continues to cause a portion of the metal main fuel to evaporate. This can be achieved, for example, by controlling the throughput of metal main fuel and oxidant by mass transport speed and/or mechanical inlet controls and/or by using a selected molar ratio of metal main fuel and oxidant in the reaction zone of the first reaction space.

In order to trigger the main reaction, the first flame must be directed towards the metal main fuel that is present in the reactor inlet zone. Moreover, the first flame generates a temperature within the metal main fuel that at least a portion of said metal main fuel melts or evaporates resulting in extraordinary electromagnetic brightness, spectrum and transport stream gas and particle temperature. This causes said metal main fuel to react with the oxidant and to generate a second flame, preferably from at least partially vaporized metal main fuel. The oxidation reaction of the metal main fuel results in an exhaust gas comprising oxidized metal fuel. Moreover, depending on the nature of the oxidant used the exhaust gas can contain valuble ingredients. If, for example, H₂O is used as an oxidant in the first reaction space, hydrogen is generated in the oxidation reaction and if CO₂ is used as an oxidant, CO is generated in the oxidation reaction. Therefore, the exhaust gasparticle mixture may contain different components which are valuable ingredients or which are less useful ingredients, depending on the nature of the oxidation reaction in the first reaction space.

The temperature of the second flame can be controlled via the nature of the reactants of the oxidation reaction and/or via process conditions and/or the reactor geometry. For example, the throughput of the metal main fuel and oxidant through the reactor, the optional presence of inert gases or the continued presence of the first flame may influence the amount of heat and electromagnetic radiation generated during the oxidation reaction.

In another preferred embodiment of the process of this invention the rate of oxidation reaction in the first reaction space is not only controlled through the intake of the metal main fuel particles and their flow mode, such as swirl rotation, concentric laminar, angular perpendicular or even confluent controversial injection, but also through the point of contact were the mass inflow of metal main fuel contacts the temperature zone of the first flame.

The process and the reactor of this invention establish a controlled first oxidizing reaction stage with net negative enthalpy by generating a first flame. And in the same reactor a second reaction stage with higher turnover and negative enthalpie is established giving a joined enthalpy to the heat of reaction.

A preferred process of this invention uses a first inlet and a second inlet for injecting a particle stream of metal secondary fuel and of metal main fuel into the first reaction space, e.g. by using a transport gas or a ballistic mass acceleration similar to a pump swirl or propeller. The metal secondary fuel powder for generating the first flame preferably has a particle size in the range between 1 and 500 µm, but particle sizes of smaller than 1 µm are also possible. The metal main fuel powder for generating the second flame preferably has a much higher particle size, e.g. a particle size in the range of 100 µm to 1 mm or larger. The heat of the first flame and a portion of the heat of the back-fed partially reacted metal secondary fuel particle mixture will allow a substantial micronization and vapourisation in-process of the metal secondary fuel feed to improve conversion to a satisfactory steady state flame process, which would not be obtained without the in-process micronisation by the heat of the first flame. Statistical thermodynamic consideration shows that such first flame core would need to be close to 2500, 2700 or above 3000°C in order to generate a self sustained second flame zone with the same orders of temperature.

This yield is in contrast to normal gas or petro-fuel burning as strong oxygen concentration may yield higher reactor temperature and might get close to the temperatures mentioned above. It is important to state that no reaction heat in form of water vapour is dissipated and withdrawn from efficiency in contrast to such normal gas or petro fuel high temperature burners.

Surprisingly, those high temperatures generated in the process of this invention can be well managed, controlled and brought to the respective energy transforming heat exchangers of standard equipment. In industrial scale the dome of the exchangers would be needed to be sized according to black-body radiation and are not a concern for large scale equipment. This means that high temperatures support heat transfer by radiation. Thus the heat exchangers are no longer dependent on high turbulent gas flow transport typical for classic burners above, but radiation is the guiding design principle for the effective fuel reactor flame cell with obvious scaling (size) and numbering (parallel reactor) advantages.

The metal oxides, such as alumina, resulting from the process of this invention is of best quality and contains metal traces which would allow for further circulating loops as well as for direct use of this high-quality product into smelter circular use much better than any mineral feedstock technically available for smelter metal production. This quality solid phase after separation from the exhaust gas via standard means like cyclones or solid product ash traps is as a typical product of the inventive process. A product with such quality can otherwise only be obtained via multi step labourious and costly additional rectification.

Transported via carrier gas, typically a mixture of an inert carrier and oxidant is introduced into the first reaction space so that the second flame is stable over a continuous period of time. Preferably, the reaction proceeds in a heat and gas controlling apparatus so that hot gases can be returned to the input zone of the first reaction space and the reaction products including the thermal energy generated during the reaction can be exploited and separated in a controlled manner.

In another preferred embodiment the first flame is stabilized and controlled and shaped via flow rotation e.g. by a swirl, for example by using a mixing device.

The reactor of this invention contains at least one first and at least one second reaction space. One of the reaction spaces is formed by the interior of a reactor jacket. This reaction space contains one or more of the other reaction space(s). There are several options available. These are described above.

The reactor of this invention is characterized by the presence of at least one feed line which supplies the one or more first reaction spaces with metal fuel selected from silicon, magnesium, iron, aluminum or alloy containing two or more of these metals.

In a preferred embodiment the reactor of this invention contains the elements A) to G) and I) or A) to I) defined above.

The reactor jacket and the tube forming the second reaction space are made from heat resistant material, such as high melting metals, ceramics, quartz glass or refractory bricks. The material must be suited to withstand temperatures of 1000°C and higher. Examples for metals are iron, preferably steel, nickel, cobalt, titanium, molybdenum, germanium, chromium, niobium, tantal, silicon, tungsten or alloys of two or more of these metals. Examples for ceramic are alumina, zirconium dioxide, boron nitride, silcon nitride or silicon carbide.

The reactor jacket may have one or more windows for igniting or supporting of for inspecting the flame(s) in the interior of the reactor. Inspection of the flame(s) can be achieved by using a camera which may be combined with a computerized monitoring system.

The shape of the reactor can vary to a large extent. Reactors can have various forms, for example reactors can be in the shape of a tube or a bundle of tubes. In alternative embodiment reactors define a first or a second reaction space of different shape, e.g. in the form of a cuboid. In this embodiment the reactor walls are lined with refractory bricks.

The reactor contains at least one feed line, preferably at least two feed lines for metal fuel leading to the inlet zone of the first reaction space. The reactor also contains at least one feed line for hydrogen-containing chemical fuel leading to the inlet zone of the second reaction space. For cylindrically shaped first and second reaction spaces these feed lines for fuel and for hydrogen-containing chemicals may proceed axially or parallel to the cylinder axis and/or may proceed radially and perpendicular through the cylindrical reactor jacket into the inlet zone or may proceed tangentially trough the cylindrical reactor jacket. Combinations of these line routings are possible.

The inlet zone may be a portion of the reaction space beginning immediately after a circular end face of a cylindrical first or second reaction space. In another embodiment the inlet zone may be located downstream a conically shaped end piece that is attached to the circular end face of the cylindrical reaction space.

The exit zone may be a portion of the reaction space beginning immediately upstream a circular end face of a cylindrical first or second reaction space. In another embodiment the exit zone may be located upstream a conically shaped end piece that is attached to the circular end face of the cylindrical reaction space.

Through feed lines B) metal fuel and/or oxidant are introduced into the inlet zone of the first reaction space. Metal fuel may be introduced via one or more lines B) and oxidant may be introduced via one or more other lines B) or a mixture of metal fuel and oxidant may be introduced via one or more feed line(s) B).

Feed line(s) B) terminate in the inlet zone of the first reaction space and introduce the reactants for the oxidation reaction into this zone. At the end of the feed lines for reactants an ignition device acts upon these and ignites the first flame.

The reactor jacket may contain a window for monitoring the reaction processes in the first and second reaction spaces and/or to provide laser radiation into the first or second reaction space to start or to support the oxidation reaction.

The reactor jacket is preferably equipped with a heat exchanger for recovering a portion of the thermal energy generated by the oxidation reaction in the reactor.

The first reaction space contains one or more discharge lines for discharging exhaust gas from the exit zone into the separation device. The exit zone is a portion of the first reaction space located downstream the reaction zone of this reaction space. In a cylindrical first reaction space the exit zone ends at the circular end face of the cylinder. The discharge line for exhaust gas may be one or more tubes or a conical hollow body with is attached to the circular end face of the cylindrical first reaction space and is connected with a separation device.

The discharge line is preferably equipped with a heat exchanger for recovering thermal energy from the exhaust gas leaving the reactor.

The separation device is used to remove solid or liquid particles from the exhaust gas. Different separation devices may be used. Examples thereof are given above.

Through feed lines D) hydrogen-containing chemical and/or further ingredients are introduced into the inlet zone of the second reaction space. Besides hydrogen-containing chemical optionally further components may be introduced into the second reaction space. Details are given above. These chemicals and components may be introduced via separate feed lines or mixtures of two or more chemicals and components may be introduced into the second reaction space.

Feed line(s) D) terminate in the inlet zone of the second reaction space and introduce the at least one hydrogen-containing chemical and optionally further components into this zone.

The second reaction space contains one or more discharge lines for discharging hydrogen and/or product gas from the exit zone out of the reactor or into a second separation device for solid and liquid components of the product gas. The exit zone is a portion of the second reaction space located downstream the reaction zone of this reaction space. In a cylindrical second reaction space the exit zone ends at the circular end face of the cylinder. The discharge line for hydrogen and/or product gas may be one or more tubes or a conical hollow body with is attached to the circular end face of the cylindrical second reaction space and may be connected with a second separation device.

In the second reaction space the hydrogen or other gaseous constituents generated therein may be separated from the product gas by permeation through the wall of the second reaction space. The remaining product gas may be discharged via the exit zone of the second reaction space. Details of these processes are disclosed above.

In an electrolysis cell placed partially or in total within the first reaction space or placed downstream a tube located within the first reaction space the hydrogen-containing chemical may be dehdrogenated by performing electrolysis. This embodiment is preferred as there is only little electric energy needed to split the hot gas in the second reaction space and/or in the electrolysis cell.

The discharge line for discharging hydrogen and/or product gas from the exit zone is preferably equipped with a heat exchanger for recovering thermal energy from the stream moving inside this line.

The material streams leaving the first separation device via discharge lines may be fed to two or more heat exchangers in order to transfer the thermal energy contained in said material streams to a heat transfer medium. Thereafter, the cooled material streams are caused to exit the reactor.

The purified product gas leaving the second separation device via a discharge line may be fed to one or more heat exchangers in order to transfer the thermal energy contained in said purified product gas to a heat transfer medium. Thereafter, the cooled product gas is fed into storage containers or is transferred to a plant for further processing.

Heat recovery can be achieved using classical heat exchangers known to the skilled artisan.

In a preferred embodiment the reactor of this invention
- the first reaction space is made of a cylindrical reactor jacket,
- the first reaction space is equipped with at least one first feed line opening into the inlet zone for a metal main fuel selected from silicon, magnesium, irontitanium, zinc, aluminum or alloy containing two or more of these metals, for an oxidant or for mixtures containing metal main fuel and oxidant,
- the first reaction space is equipped with at least one discharge line for the exhaust gas located downstream the outlet zone of the first reaction space,
- the first reaction space is equipped at least one second feed line for particles of metal secondary fuel or hydrogen or oxidant or for mixtures of said particles, hydrogen and/or oxidant which ends in the inlet zone of the first reaction space and supplies said particles, hydrogen, oxidant or mixtures thereof to generate a mixture of said particles and oxidant or of said hydrogen and oxidant at the end of said feed line(s) for establishing a first flame,
- the first reaction space is equipped with at least one ignition device to ignite the mixture at the end of said second feed line(s) to generate a first flame at the end of said second feed line(s) thereby generating a reaction zone by transferring thermal energy to metal main fuel present in the inlet zone of said first reaction space to cause a portion of the metal main fuel to melt and/or to evaporate and to ignite a second flame by initiating reaction of the metal main fuel with the oxidant present in the first reaction space, and
- at least one heat exchanger transferring thermal energy generated in the first reaction space or being available from the exhaust gas and/or from the purified exhaust gas into a heat transfer medium, which heat exchanger is associated with the reactor jacket and/or is associated with a discharge line downstream the outlet zone of the first reaction space to the first separation device and/or is associated with a discharge line removing the purified exhaust product gas from the first separation device.

In another preferred embodiment the reactor of this invention contains as a first reaction space a volume enclosed by refractory bricks or preferably a volume that is the interior of a cylindrical jacket made of metal or ceramics.

A preferred reactor of this invention is characterized in that a cylindrical reactor jacket is present the interior space thereof forming a first reaction space, and one to five, preferably two or three axially passing feed lines for metal fuel and/or oxidant are present which pass through the front face of the cylindrical reactor jacket and open into the inlet zone of said first reaction space and/or one or more, preferably one to five and most preferred one to three radially passing feed lines for metal fuel and/or oxidant are present which pass through the reactor jacket and open into the inlet zone of the first reaction space.

Also preferred is a reactor of this invention that is characterized in that one or more, preferably one to five and most preferred one to three tangentially passing feed lines for metal fuel and/or oxidant are present which pass tangentially through the reactor jacket and open into the inlet zone of the first reaction space.

Another preferred reactor of this invention is characterized in that at least one mirror is present in the first reaction space that concentrates the electromagnetic radiation generated in the first reaction space towards the second reaction space.

Still another preferred reactor of this invention is characterized in that at least one electrolysis cell is placed partially or in total within the first reaction space or is placed downstream a tube located within the first reaction space for performing electrolysis of the hot hydrogen-containing chemical within said electrolysis cell.

Another preferred reactor of this invention contains at least one line connecting the outlet zone of the second reaction space with the inlet zone of the second reaction space for recirculating a portion of the product gas generated in the second reaction space.

Also preferred is a reactor of this invention which contains an ignition device which is selected from one or more pilot flames or electric arcs arranged in the inlet zone at the end of the second feed line(s) of the first reaction space and/or one or more inductive heaters or lasers arranged outside the reactor, the radiation of the laser is coupled into the first reaction space through one or more windows in the reactor wall, so that pilot flames or electric arcs and/or electromagnetic radiation and/or laser radiation act on the space region at the end of the second feed line(s) to generate a first flame.

Another preferred reactor of this invention is characterized in that a cylindrical reactor jacket is provided through which a plurality of feed lines pass tangentially to feed the inlet zone of the first reaction space with inert gas and/or gaseous oxidant and/or particulate metal fuel, as a result of which a vortex is formed at the interior of the reactor jacket, which vortex moves towards the direction of the outlet zone of the first reaction space.

In another preferred reactor of this invention at least one second reaction space is formed by the interior of one or more tubes traversing the first reaction space or at least one first reaction space is formed by the interior of one or more tubes traversing the second reaction space.

Very preferred is a reactor of this invention, wherein the second reaction space is separated from the first reaction space by a tube which is permeable for oxygen but not for hydrogen thus allowing the oxygen to permeate through said wall into the first reaction space, preferably a wall made of oxygen-conducting ceramic material or wherein the wall of the tube separating the second reaction space from the first reaction space is permeable for hydrogen but not for oxygen and nitrogen thus allowing the hydrogen to permeate through said wall into the first reaction space, preferably a wall made of nickel or a nickel-containing alloy, or wherein the wall of the tube separating the second reaction space from the first reaction space is a double-wall forming a discharge space that is located between the second reaction space and the first reaction space and that contains a discharge line for a gas permeated through the wall between the second reaction space and the discharge space.

In a preferred embodiment of the reactor described in the upper paragraph the discharge space is formed by a first wall separating the first reaction space from the discharge space and by a second wall separating the second reaction space from the discharge space, wherein the second wall is permeable for hydrogen but not for oxygen and nitrogen, preferably made from nickel or a nickel-containing alloy, thus allowing the hydrogen to diffuse through said wall into the discharge space and wherein the first wall is not permeable for hydrogen, preferably made from iron or an iron-containing alloy, thus allowing the hydrogen to remain in the discharge space.

In another preferred reactor of this invention the first separation device is one or more cyclones.

In still another preferred reactor of this invention a heat exchanger is provided that is associated with the cylindrical reactor jacket surrounding the first reaction space or the second reaction space and/or that contains a heat exchanger that is associated with a line connecting the outlet of the first reaction space with the first separation device or that is associated with a line connecting the outlet of the second reaction space and the second separation device and/or that contains a heat exchanger that is associated with a line removing a material stream from the reactor.

Vey preferred is a reactor of this invention that is combined with a chemical reactor wherein the hydrogen produced in the reactor is used to carry out reduction reactions.

### Description of the Drawings

Figure 1 shows a reactor of this invention with first reaction space comprising axially and tangentially arranged feed lines for metal fuel and oxidant and with a tube forming a second reaction space.
Figure 2 shows a modification of the reactor of Figure 1 comprising a cyclone at the exit of the second reaction space.
Figure 3 shows another modification of the reactor of Figure 1 comprising a second reaction space having no tube wall but being spatially separated from the flame in the first reaction space.
Figure 4 shows another modification of the reactor of Figure 1 having no tangentially arranged feed lines for metal fuel and oxidant.
Figure 5 shows another modification of the reactor of Figure 1 with a first and second flame in the first reaction space and having an electrolytic cell as a second reaction space.

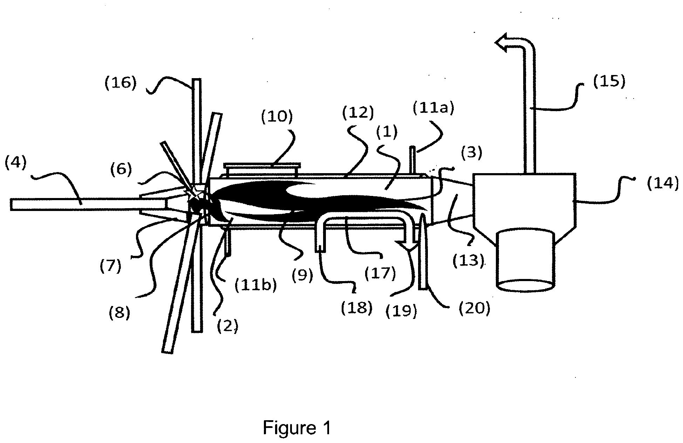

The reactors illustrated in Figures 1 to 5 are modified embodiments of a reactor disclosed in an article of F. Halter et al. in Applications in Energy and combustion Science, Vol. 13, (2023).

The reactors illustrated in Figures 1 to 5 are modified embodiments of a reactor disclosed in an article of F. Halter et al. in Applications in Energy and combustion Science, Vol. 13, (2023) (https://doi.org/10.1016/j.jaecs.2022.100100) or disclosed in an article of D. Laraqui et al. in Applied Energy 264 (2020) 114691.

The reactor of Figure 1 contains a first reaction space (1) with an inlet zone (2) for reactants and an exit zone (3) for exhaust gas. Inlet zone (2) contains an axial feed tube (4) for introducing a mixture of metal fuel and oxidant for flame (9) and several radially or tangentially arranged feed lines (16) for metal fuel, or oxidant or a mixture of metal fuel and oxidant. Caused by the radial or tangential introduction of metal fuel and/or oxidant a swirl (8) is formed around flame (9). Swirl (8) encloses flame (9) and propagates in the direction of exit zone (3). Close to the end of axial feed line (4) an ignition device (6) is positioned. Ignition device (6) forms an electric arc and ignites the fuel transported through feed lines (4, 16) resulting in flame (9). The reactor is formed by a cylindrical reactor jacket containing a window (10) for inspecting the reaction taking place in the interior of the reactor. Reactor jacket is surrounded by a heat exchanger (12) having an inlet line (11a) and an exit line (11b) for heat transfer medium, e.g. water. One front end of the cylindrical reactor jacket is equipped with a conically shaped end piece (7). Axial feed line (4) passes through end piece (7). The other circular end face of the cylindrical reactor jacket is connected with a conical discharge line (13) for the exhaust gas which connects exit zone (3) with a cyclone (14) for separating particles from the exhaust gas. The purified exhaust gas exits the reactor via line (15).Within the first reaction space (1) a quartz glass tube is installed forming the second reaction space (17). The tube is arranged close to the interior of the reactor jacket forming the first reaction space. In this region of first reaction space (1) temperatures are lower compared to the region at the central axis of the cylindrical reactor jacket. A hydrogen-containing chemical, e.g. water, is introduced into the second reaction space (17) via inlet (18), propagates through the second reaction space (17) forming a product gas which exits the second reaction space (17) through outlet (19). The second reaction space (17) is heated by the thermal energy generated within the first reaction space (1) causing the dehydrogenation reaction of the hydrogen-containing chemical forming a product gas. Finally, the temperature in the first reaction space close to the exit of tube (17) is measured by a thermocouple (20).

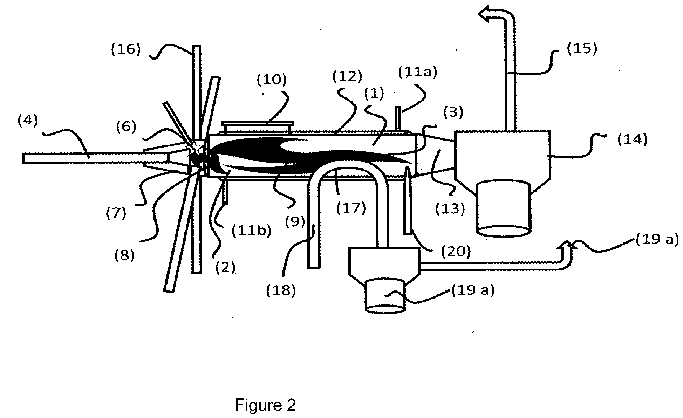

The reactor of Figure 2 corresponds to the reactor of Figure 1 with the addition that the outlet of the second reaction space is connected with another cyclone (19a) for separating particles from the product gas. The purified product gas exits cyclone (19a) via line (19b). This embodiment of the reactor of the invention is preferably used when the feed stream injected via inlet (18) contains particulate metal fuel, hydrogen-containing chemical and optionally oxidant for the metal fuel.

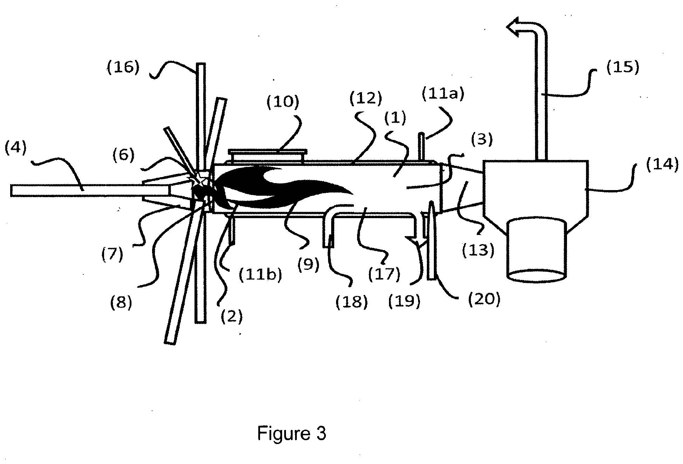

The reactor of Figure 3 corresponds to the reactor of Figure 1 with the amendment that instead of using a tube forming the second reaction space (17) inlet (18) feeds the hydrogen-containing chemical into the interior of the first reaction space (1). The location of inlet (18) is arranged in a manner, that the space containing hydrogen-containing chemical is separated from flame (9) generated within the first reaction space (1). The space containing the hydrogen-containing chemical forms the second reaction space (17) without any wall separating first and second rection spaces from each other. The product gas developed within the second reaction space (17) exits the reactor via outlet (19). In this embodiment inlet (18) and outlet (19) are preferably equipped with pumps (not shown) which promote the stream of chemical(s) through the second reaction space (17).

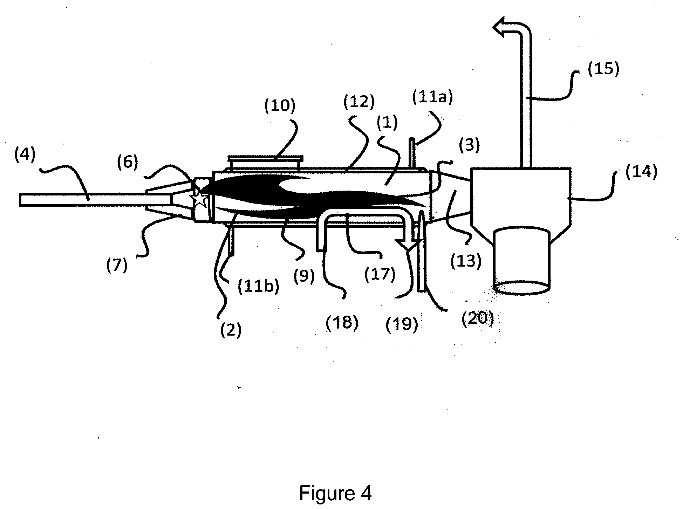

The reactor of Figure 4 corresponds to the reactor of Figure 1 with the amendment that radially or tangentially arranged feed lines (16) are missing. In this embodiment of the reactor no swirl (8) around flame (9) is formed. Through window (10) the flame (9) in the first reaction space (1) can be monitored or the flame (9) can be ignited or supported by a laser placed outside the reactor. Outlet (19) of the second reaction space (17) may be connected with an electrolysis cell (not shown).

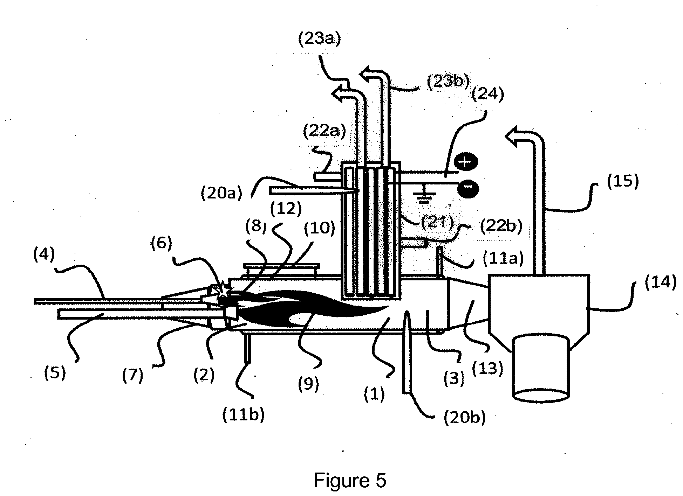

The reactor of Figure 5 corresponds to the reactor of Figure 1 with the addition that in the first reaction space (1) a first flame (8) and a second flame (9) are generated. Inlet zone (2) contains an axial feed tube (4) for a mixture of particulate secondary metal fuel and oxidant for the second flame (8) and an axial feed line (5) for a mixture of metal main fuel and oxidant for the first flame (9). Close to the end of axial feed line (4) an ignition device (6) is positioned. Ignition device (6) forms an electric arc and ignites the fuel transported through feed line (4) resulting in the second flame (8). This second flame (8) in turn ignites the fuel transported through feed line (5) resulting in the first flame (9). Moreover, this reactor contains an electrolytic cell (21) forming a second reaction space. The electrolytic cell (21) is equipped with elecrode DC power lines (24) and with lines (22a, 22b) for infeeding and outfeeding the electrolysis educt, such as H₂O, and with lines (23a, 23b) for outfeeding the electrolysis products from the cell. The lower part of the electrolytic cell (21) protrudes into the first reaction space (1) and is heated by the second flame (9). A hydrogen-containing chemical, e.g. water, is introduced into the electrolytic cell (21) and is heated by the thermal energy generated in the first reaction space (1). The hot hydrogen-containing chemical is electrolytically split into its components. The electric power to this is considerably lower compared with electrolysis at room temperature. The temperature in the exit zone (3) of the first reaction space (1) is measured by a thermocouple (20b) and the temperature in the electrolytic cell (21) is measured by a thermocouple (20a).

The following examples describe the invention without limiting it to the examples.

### Set up

A metal burner combined with a continuous pyrolysis reactor was designed for both generation of heat and valuable chemical products. The reactor is illustrated in Figure 1 and comprised the following main parts:
- dosing of metallic fuel, air and optionally further flame educts
- a combustion chamber (= first reaction space)
- particles separation
- heat exchanger
- pyrolysis reactor (= second reaction space)

The combustion chamber consisted of a cooled double-walled pipe, 0.6 m long with an internal diameter of 0.105 m made of stainless steel.

The metal fuel was an aluminium powder with a purity greater than 99.8% and supplied by CarlRoth. Fuel injection was conducted with a PALAS BEG 1000 type B which allowed a continuous and homogeneous injection of fluid dispersed particles. An Aluminium air mixture was injected into the first reaction space. The totally injected air flow rate ranged between 4.6 Nm³/h and 8.6 Nm³/h.

The power supplied by the combustion varied between 10 kW and 23 kW.

Heat recovery was achieved with a water-cooled combustion chamber.

The aluminium flame was stabilized by a swirled flow which was generated by a secondary air injected through four tangential inlets into the first reaction space ((1) in Fig. 1). Swirl stabilization allowed a flame holding with a high power dissipated in a small sized burner.

The pyrolysis reactor (17 in Fig.1) consisted of a quartz glass tube of inner diameter of 15 mm and length of 20 cm from Sommerschmied Spezialglasrohre (https://www.glas-rohr.de/de/quarz.html) and was bent to U-form and adopted to the Al burner so that 10 cm of tube length were positioned in the downstream half of the first reaction space ((1) in Fig. 1) with 1 cm distance to the interior wall of the combustion chamber. The quartz glass tube was placed inside the reactor in a region having lower temperatures than in the central axis of the cylindrical first reaction space. Both ends of the quartz glass tube were led through the combustion chamber wall.

The educt for the pyrolysis was continuously dosed by a HPLC Dosing pump from Bischoff (https://bischoff365.com/Dosierpumpe-mit-Pumpenkopf-Semipraeparativ-01-bis-20-ml-min; not shown in Fig. 1) and could be varied from 0.1 to 20 ml/min.

The gas temperature in the combustion chamber close to the pyrolysis reactor was determined using a type K thermocouple located downstream and along the pyrolysis reactor tube axis ((20) in Fig. 1).

The reaction product of the pyrolysis (= product gas) was analysed with a gas-phase chromatograph from Thermo Fisher (not shown in Fig. 1) equipped with a TCD (thermal conductivity detector) and FID (flame ionisation detector) which allowed to quantify the content of hydrogen, carbon monoxide, carbon dioxide and hydrocarbons.

### Experimental procedure

Before the experiment the pyrolysis reactor had been washed with solvents and detergent and rinsed several times with hot distilled water.

After establishing the swirl by tangential air flow ((8) in Fig. 1), dosing of the air dispersed solid Aluminium fuel through the axial feed line ((4) in Fig. 1) was started and the flame was ignited. As the flame had been stabilized after about 30 s the dosing of methanol into the quartz glass tube was started. The first pyrolysis of gas sample (= product gas) was analysed by gas chromatograph after about 5 minutes.

### Example 1:

An empty quartz glass tube was used as pyrolysis reactor.

Dosing rates for the burner were 2.1 kg/h Aluminium dispersed in 2.5 m³(n)/h air injected via the axial feed line (4 in Fig. 1) plus 3.5 m³(n)/h air to induce the swirl ((8) in Fig. 1).

Dosing rate for the pyrolysis was set to 5 ml/min methanol.

The temperature downstream of the pyrolysis reactor was 820 °C.

The reaction product contained 46 mol-% hydrogen, 28 mol-% formaldehyde, 7 mol-% methane, 10 mol-% carbon monoxide and traces of dimethyl ether and carbon dioxide.

In an empty quartz glass tube main chemical reaction is the dry, non-oxidative dehydrogenation of methanol to hydrogen plus formaldehyde.

### Example 2:

A quartz glass tube was used which was filled with 3 g silver wool from CarIRoth purity greater then 99,9% (https://www.carlroth.com/de/de/silber/silber-wolle/p/9373.1).

Dosing rates for the burner are 1.9 kg/h Aluminium dispersed in 2.5 m³(n)/h air (4 in Fig. 1) plus 3.5 m³(n)/h air (19 in Fig. 1).

Dosing rate for the pyrolysis was set to 7 ml/min methanol.

The temperature outside the pyrolysis reactor was 635 °C.

The reaction product contained 51 mol-% hydrogen, 32 mol-% formaldehyde, 6 mol-% carbon monoxide and traces of dimethyl ether and carbon dioxide and methane. With silver catalysis the dry, non-oxidative dehydrogenation of methanol to hydrogen and formaldehyde was found to be enhanced compared to example 1.

### Example 3:

A quartz glass tube was used which was filled with 12 g Aluminium powder (<160 µm from CarIRoth; https://www.carlroth.com/de/de/nicht-regenierbare-trocknungsmittel/aluminium-pulver/p/5285.1), which was oxidated at its surface. Dosing rates for the burner are 1.6 kg/h Aluminium dispersed in 2.5 m³(n)/h air (4 in Fig. 1) plus 3.5 m³(n)/h air (19 in Fig. 1)

Dosing rate for the pyrolysis was 20 ml/min methanol.

The temperature outside the pyrolysis reactor was 527 °C.

The reaction product contained 57 mol-% dimethyl ether, 11 mol-% carbon monoxide, 25 mol-% hydrogen and traces of formaldehyde and methane.

In the presence of oxidated surfaces of Aluminium, the dehydration of methanol to dimethyl ether is supported.

### Example 4:

A modified reactor of Figure 1 was used. Instead of a quartz glass tube an empty tube made tungsten was used as pyrolysis reactor. The pyrolysis reactor had an inner diameter of 15 mm, a length of 40 cm, was bent to U-form and was adopted to the Al burner so that about 20 cm of tube length were positioned in the central axis of the first reaction space (flame axis). The tube was placed inside the reactor in a region having the highest temperatures in the first reaction space. Both ends of the tube were led through the combustion chamber wall. In order to prevent back reaction of the hydrogen the product gas the reaction product was quenched directly at the end of the tungsten tube by conveying an Argon stream of 0.7 m³(n)/h and guiding the mixture through a cooled tube.

Dosing rates for the burner were 2.9 kg/h Aluminium dispersed in 3 m³(n)/h air injected via the axial feed line (4 in Fig. 1) plus 1.3 m³(n)/h O₂ to induce the swirl ((8) in Fig. 1).

Dosing rate for the pyrolysis was set to 32 ml/s of 150°C steam.

The temperature downstream of the pyrolysis reactor was 2180 °C.

The reaction product contained 0.9 mol-% hydrogen as well as oxygen and non-dissociated water.

### Example 5:

A modified reactor of Figure 1 was used. Instead of a quartz glass tube an empty tube made platinum was used as pyrolysis reactor. The pyrolysis reactor had an inner diameter of 15 mm, a length of 40 cm, was bent to U-form and was adopted to the Al burner so that about 20 cm of tube length were positioned in the central axis of the first reaction space (flame axis). The tube was placed inside the reactor in a region having the highest temperatures in the first reaction space. Both ends of the tube were led through the combustion chamber wall. In order to prevent back reaction of the hydrogen the product gas the reaction product was quenched directly at the end of the tungsten tube by conveying an Argon stream of 0.7 m³(n)/h and guiding the mixture through a cooled tube.

Dosing rates for the burner were 2.1 kg/h Aluminium dispersed in 2.5 m³(n)/h air injected via the axial feed line (4 in Fig. 1) plus 0.85 m³(n)/h O₂ to induce the swirl ((8) in Fig. 1).

Dosing rate for the pyrolysis was set to 32 mils of 150°C steam.

The temperature downstream of the pyrolysis reactor was 1600 °C.

The reaction product contained 0.2 mol-% hydrogen as well as oxygen and non-dissociated water.

### Example 6:

This example demonstrates the generation of a flame to be used in a first reaction space.

With a vertical (upward) burner, a spray of Aluminium (< 100 µm) was ignited, the flame being self-sustained. Ignition was made with a pilot flame of CH₄ / air mixture.

An upward laminar flow was created by a flow of nitrogen purged via a porous plate, and protected from external perturbation with the help of a quartz cylinder. By this the flame is totally contained and isolated from ambient air.

The combustion of the pilot flame generated CO₂ and water and an excess of oxygen was present. The oxygen excess, together with the water and CO₂ are the oxidant for the aluminium oxidation,

The evidence of hydrogen generation was proven at the exit of the quartz cylinder where sudden reaction of H₂ with ambient air occured,

Aluminum particles evaporation and combustion was captured with a very high speed video camera (Phantom) and a high resolution camera (Nikon) with the help of a laser beam.

## Claims

1. A process for producing hydrogen from a hydrogen-containing chemical in a reactor having at least one first reaction space and at least one second reaction space which are separated from each other, wherein in the first reaction space thermal energy is generated by an oxidation reaction and in the second reaction space the hydrogen-containing chemical is dehydrogenated into hydrogen and dehydrogenated product by using the thermal energy generated in the first, reaction space, **characterized in that** the oxidation reaction in the first reaction space is between a metal fuel selected from silicon, magnesium, iron, titanium, zinc, aluminum or alloy containing two or more of these metals and an oxidant.

2. The process according to claim 1, **characterized in that** the first reaction space and the second reaction space are separated from each other by a predetermined distance without a wall between the reaction spaces so that the thermal energy generated in the first reaction space can interact upon the hydrogen-containing chemical in the second reaction space or that the first reaction space and the second reaction space are separated from each other by a wall so that the thermal energy generated in the first reaction space can interact via said wall upon the hydrogen-containing chemical in the second reaction space.

3. The process according to at least one of claims 1 or 2, **characterized in that** the dehydrogenation of the hydrogen-containing chemical in the second reaction space is promoted by using electrical power to split the hot hydrogen-containing chemical into hydrogen and dehydrogenated product.

4. The process according to at least one of claims 1 to 3, **characterized in that** the reactor has at least one first reaction space with an inlet zone for reactants, a reaction zone for the oxidation reaction and an outlet zone for an exhaust gas, and said reactor has at least one second reaction space with an inlet zone for reactants, a reaction zone for reacting the reactants and an outlet zone for a product gas, wherein the first reaction space and the second reaction space are separated from each other by a predetermined distance without a wall between the reaction spaces or wherein the first reaction space and the second reaction space are separated from each other by a wall, and wherein the first reaction space surrounds the second reaction space or wherein the second reaction space surrounds the first reaction space.

5. The process according to at least one of claims 1 to 4 **characterized in that** a cylindrical reactor is used, gaseous oxidant and metal fuel is introduced into the inlet zone of the first reaction space via at least one axial feed line to generate a flame within the first reaction space and inert gas and/or gaseous oxidant and/or metal fuel is introduced into the inlet zone of the first reaction space via a plurality of feed lines passing tangentially through the reactor jacket thereby generating a vortex at the interior of the reactor jacket enveloping the flame and moving towards the direction of the outlet zone of the first reaction space.

6. The process according to at least one of claims 1 to 5 comprising at least the steps:
a) introducing metal fuel selected from silicon, magnesium, iron, titanium, zinc, aluminum or alloy containing two or more of these metals, an oxidant for the metal fuel and optionally an inert gas into the inlet zone of the at least one first reaction space,
b) reacting the metal fuel and the oxidant in the at least one first reaction space thereby providing a flame temperature of at least 700°C and generating an exhaust gas comprising oxidized metal fuel and thermal energy ,
c) discharging the exhaust gas from the outlet zone of the at least one first reaction space into at least one first separation device,
d) separating the oxidized metal fuel from the exhaust gas in the at least one first separation device, thereby producing a purified exhaust gas,
e) discharging the oxidized metal fuel and the purified exhaust gas from the at least one first separation device to exit the reactor,
f) introducing a hydrogen-containing chemical and optionally a metal fuel selected from silicon, magnesium, iron, titanium, zinc, aluminum or alloy containing two or more of these metals and/or optionally an inert gas into the in the inlet zone of the at least one second reaction space,
g) reacting the hydrogen-containing chemical in the at least one second reaction space to form a product gas by dehydrogenation of the hydrogen-containing chemical into hydrogen and dehydrogenated products using the thermal energy produced in the at least one first reaction space, or treating the hot hydrogen-containing chemical with electrical power in an electrolysis cell being placed in total or partially within the first reaction space or being located outside the first reaction space but being connected with a second reaction space placed within the first reaction space to generate hydrogen and dehydrogenated products,
h) optionally recirculating a portion of the product gas from the outlet zone of the second reaction space into the inlet zone of the second reaction space,
i) separating the components of the product gas from each other by
- causing one of the components in the product gas to permeate through the wall of the second reaction space and by discharging the remaining product gas through the outlet zone of the second reaction space to exit the reactor, or
- discharging the product gas through the outlet zone of the second reaction space into at least one second separation device wherein solid and liquid components of the product gas are separated and a purified product gas is obtained and the separated components and the purified product gas are discharged from the second separation device to exit the reactor or
- discharging the hydrogen and the dehydrogenated products generated by electrolysis from the electrolysis cell to exit the reactor, and
j) recovering thermal energy contained as excess heat in the first reaction space and/or in the material streams exiting the first separation device and/or the second separation device, the second reaction space and/or the electrolysis cell by cooling the reactor jacket by means of a heat transfer medium and/or by conducting the material streams through one or more heat exchangers.

7. The process according to claim 6, **characterized in that** in step i) the constituents contained in the product gas are separated from each other by performing one of the steps i1), i2), i3), i4) or i5),
i1) separating hydrogen and the other components of the product gas from each other by introducing the hydrogen or the other components into the first reaction space via the wall separating the second reaction space from the first reaction space and by discharging that portion of the product gas that remains in the second reaction space via the outlet zone of the second reaction space to exit the reactor, or
i2) separating hydrogen and the other components of the product gas from each other by causing the hydrogen or the other components of the product gas to permeate from the second reaction space into a discharge space that is located between the first reaction space and the second reaction space and is formed by two walls separating the first reaction space from the discharge space and separating the second reaction space from the discharge space, discharging the hydrogen or the other components of the product gas from the discharge space to exit the reactor and discharging the product gas that remains in the second reaction space via the outlet zone of the second reaction space to exit the reactor, or
i3) discharging the product gas containing only gaseous products via the oulet zone of the second reaction space into at least one second separation device to separate the gaseous products from each other and to cause said separated products to exit the reactor, or
i4) discharging the product gas containing gaseous products and solid and liquid components via the outlet zone of the second reaction space into at least one second separation device to separate the gaseous products and the solid and liquid components from each other and to cause said separated products and components to exit the reactor, or
i5) causing the electrolysis products generated in the electrolysis cell to exit the reactor.

8. The process according to any of claims 1 to 7, **characterized in that** hydrogen-containing chemical introduced into the at least one second reaction space is selected from the group consisting of H₂O, NH₃, hydrogen and carbon containing compounds, preferably hydrocarbons, alcohols, carboxylic acids or mixtures of two or more thereof, more preferred H₂O, mixtures of NH₃ and H₂O, mixtures of CO₂ and H₂O, methan, ethane, ethylene, methanol, ethanol, formic acid, acetic acid, fatty acids, fatty alcohols, aromatic compounds, methylcyclohexane or said compounds or mixtures diluted with inert gases.

9. The process according to any of claims 1 to 8, **characterized in that** the hydrogen-containing chemical introduced into the second reaction space is H₂O and that the dehydrogenation reaction is an electrolysis of the H₂O at a temperature between 700 and 1500°C into hydrogen and oxygen, said electrolysis being performed in an electrolysis cell placed in total or partially within the first reaction space or being located outside the first reaction space but being connected with a second reaction space placed within the first reaction space or that the dehydrogenation reaction is a thermolysis of the H₂O at a temperature between 1700 and 3200°C into hydrogen and oxygen, said thermolysis being performed in the second reaction space.

10. The process according to at least one of claims 1 to 9, **characterized in that** the hydrogen produced in the process is free of tritium.

11. A reactor for producing hydrogen from a hydrogen-containing chemical having at least one first reaction space and at least one second reaction space which are separated from each other, wherein in the first reaction space thermal energy is generated by an oxidation reaction between a metal fuel and an oxidant and in the second reaction space the hydrogen-containing chemical is dehydrogenated into hydrogen and dehydrogenated product by using thermal energy generated in the first reaction space, **characterized in that** the at least one first reaction space is combined with at least one feed line for introducing a metal fuel selected from silicon, magnesium, iron, titanium, zinc, aluminum or alloy containing two or more of these metals.

12. The reactor of claim 11 comprising the elements:
A) at least one first reaction space with an inlet zone for a metal fuel selected from silicon, magnesium, iron, titanium, zinc, aluminium or alloy containing two or more of these metals, a central zone for reacting the metal fuel with oxydant and an outlet zone for an exhaust gas comprising oxidized metal fuel generated in said first reaction space,
B) at least one feed line for introducing the metal fuel, for introducing an oxidant for the metal fuel or for introducing a mixture of metal fuel and oxidant into the in the inlet zone of the first reaction space,
C) at least one second reaction space with an inlet zone for a hydrogen containing chemical and optionally further reactants, a central zone for dehydrogenating the hydrogen containing chemical and an outlet zone for a product gas generated in said second reaction space or which second reaction space is a cell for electrolysis of the hot hydrogen-containing chemical said cell being placed in total or partially within the first reaction space or said cell being located outside the first reaction space but being connected with a second reaction space placed within the first reaction space, which
first and second reaction spaces are separated from each other and are arranged to allow the thermal energy generated in the first reaction space to promote the dehydrogenation of the hydrogen-containing chemical in the second reaction space,
D) at least one feed line for introducing the hydrogen-containing chemical, or further reactants or a mixture of hydrogen-containing chemical and further reactants into the in the inlet zone of the second reaction space,
E) at least one first separation device which is connected to the exit zone of the first reaction space and in which the oxidized metal fuel is removed from the exhaust gas to generate a purified exhaust gas,
F) discharge lines for removal of the oxidized metal fuel and the purified exhaust gas from the first separation device to exit the reactor,
G) at least one discharge line for the product gas or for components of the product gas from the second reaction space to exit the reactor and/or at least one second separation device for separating solid and liquid components of the product gas to generate a purified product gas, which second separation device is connected to the exit zone of the second reaction space and from which the separated solid and liquid components and the purified product gas are discharged via discharge lines to exit the reactor and/or discharge lines for discharging the electrolysis products from the electrolysis cell to exit the reactor,
H) optionally at least one line connecting the outlet zone of the second reaction space with the inlet zone of the second reaction space for recirculation of a portion of the product gas generated within the second reaction space, and
I) at least one heat exchanger for recovering heat generated in the first reaction space or in the material streams exiting the reactor.

13. The reactor according to at least one of claims 11 to 12, **characterized in that** at least one electrolysis cell is is placed partially or in total within the first reaction space or is placed downstream a tube located within the first reaction space for performing electrolysis of the hot hydrogen-containing chemical within said electrolysis cell.

14. The reactor according to at least one of claims 11 to 13, **characterized in that** a cylindrical reactor jacket is provided through which a plurality of feed lines pass tangentially to feed the inlet zone of the first reaction space with inert gas and/or gaseous oxidant and/or metal fuel, as a result of which a vortex is formed at the interior of the reactor jacket, which vortex moves towards the direction of the outlet zone of the first reaction space.

15. The reactor according to at least one of claims 11 to 14, **characterized in that** the at least one second reaction space is formed by the interior of one or more tubes traversing the first reaction space or **in that** the at least one first reaction space is formed by the interior of one or more tubes traversing the second reaction space.
